(19) Europäisches Patentamt
European Patent Office
Office européen des brevets

(11) EP 3 368 493 B1

(12) # EUROPÄISCHE PATENTSCHRIFT

(45) Veröffentlichungstag und Bekanntmachung des Hinweises auf die Patenterteilung:
**31.07.2024 Patentblatt 2024/31**

(21) Anmeldenummer: **16787822.2**

(22) Anmeldetag: **25.10.2016**

(51) Internationale Patentklassifikation (IPC):
***C04B 24/12** (2006.01)* ***C04B 28/02** (2006.01)*
***C04B 40/00** (2006.01)*

(52) Gemeinsame Patentklassifikation (CPC):
(C-Sets verfügbar)
**C04B 24/121; C04B 28/02; C04B 40/0039** (Forts.)

(86) Internationale Anmeldenummer:
**PCT/EP2016/075699**

(87) Internationale Veröffentlichungsnummer:
**WO 2017/072126 (04.05.2017 Gazette 2017/18)**

(54) **INERTISIERUNG VON TONMINERALIEN UND VERBESSERUNG DER WIRKUNG VON VERFLÜSSIGERN IN TONHALTIGEN MINERALISCHEN BINDEMITTELZUSAMMENSETZUNGEN**

INERTISATION OF CLAY MINERALS AND IMPROVEMENT OF LIQUIDIZERS IN MINERAL BINDER COMPOSITIONS CONTAINING CLAY

INERTISATION DE MINÉRAUX ARGILEUX ET AMÉLIORATION DE L'ACTION DE LIQUÉFACTEURS DANS DES COMPOSITIONS DE LIANT MINÉRALES CONTENANT DE L'ARGILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2015 EP 15191541**

(43) Veröffentlichungstag der Anmeldung:
**05.09.2018 Patentblatt 2018/36**

(73) Patentinhaber: **Sika Technology AG**
**6340 Baar (CH)**

(72) Erfinder:
- **MARAZZANI, Beat**
  **8102 Oberengstringen (CH)**
- **COLAIACOVO, Giuseppe**
  **8955 Oetwil an derLimmat (CH)**
- **BÜRGE, Christian**
  **5503 Schafisheim (CH)**
- **WOMBACHER, Franz**
  **8916 Jonen (CH)**

(74) Vertreter: **Sika Patent Attorneys**
**C/o Sika Technology AG**
**Corp. IP Dept.**
**Tüffenwies 16**
**8048 Zürich (CH)**

(56) Entgegenhaltungen:
**EP-A1- 2 341 039**
**EP-A1- 2 711 347**
**WO-A1-00/23393**
**WO-A1-2013/124003**
**WO-A1-98/58887**
**WO-A2-2011/083182**
**AT-B- 380 228**
**CN-A- 101 328 053**
**CN-A- 101 811 840**
**US-A- 5 213 668**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)

C-Sets
**C04B 28/02, C04B 22/141, C04B 22/165, C04B 24/04, C04B 24/06, C04B 24/124, C04B 24/42, C04B 2103/408;**
**C04B 40/0039, C04B 24/121, C04B 24/163, C04B 24/18, C04B 24/223, C04B 24/226, C04B 24/2641, C04B 24/2647;**
**C04B 40/0039, C04B 24/121, C04B 2103/408**

## Beschreibung

### Technisches Gebiet

Die Erfindung betrifft die Verwendung einer Aminverbindung teilweise oder vollständig in Form eines Salzes der Aminverbindung zur Inertisierung von Tonmineralien gegenüber Dispergiermitteln in einer mineralischen Bindemittelzusammensetzung enthaltend Tonmineralien und/oder zur Verbesserung der Wirkung eines Dispergiermittels in einer mineralischen Bindemittelzusammensetzung enthaltend Tonmineralien. Weitere Aspekte der Erfindung betreffen Zusammensetzungen enthaltend eine Aminverbindung sowie Verfahren zur Herstellung von Zusammensetzungen.

### Stand der Technik

Bindemittelzusammensetzungen, wie z.B. Mörtel- oder Betonmischungen, enthalten nebst einem Bindemittel, beispielsweise Zement, üblicherweise Zuschlagstoffe. Diese werden auch als Aggregate bezeichnet. Als Zuschlagstoffe werden typischerweise Gesteinskörnungen in Form von Sand und/oder Kies eingesetzt. Bekannt sind aber auch organische Zuschlagstoffe, z.B. Kunststoffe wie Polystyrol.

Um die Verarbeitbarkeit der Bindemittelzusammensetzungen bei möglichst geringem Wasser/Bindemittel-Verhältnis zu verbessern ist es zudem üblich, sogenannte Dispergiermittel als Verflüssiger einzusetzen. Dadurch wird sowohl eine gute Verarbeitbarkeit der flüssigen Bindemittelzusammensetzung als auch hohe mechanischen Festigkeit nach deren Aushärten erreicht. Als besonders effektive Dispergiermittel bekannt sind beispielsweise Kammpolymere auf Polycarboxylatbasis. Solche Kammpolymere verfügen über ein Polymerrückgrat und daran gebunden Seitenketten und werden auch als Polycarboxylatether bezeichnet. Entsprechende Polymere sind z.B. in der EP 1 138 697 A1 (Sika AG) beschrieben.

Die Qualität der Zuschlagstoffe oder Aggregate hat dabei einen grossen Einfluss auf die Verarbeitbarkeit der Bindemittelzusammensetzung und die Eigenschaften des ausgehärteten Produkts. Gewisse Zuschläge beeinflussen den Wasser- und Dispergiermittelbedarf massiv. Dies sind unter anderem Zuschlagstoffe oder Aggregate enthaltend tonhaltige Mineralien bzw. Tone. Verglichen mit hochwertigeren Zuschlagstoffen, z.B. frischer Flusssand oder Flusskies, wird der Wasser- und/oder Dispergiermittelbedarf für eine identische Verarbeitbarkeit drastisch erhöht, was unerwünscht ist.

Ein Entfernen der problematischen Tone ist zwar möglich, bedingt aber einen relativ grossen Aufwand und ist entsprechend teuer.

In solchen Fällen wird daher üblicherweise der Anteil an Dispergiermittel erhöht, was jedoch höhere Kosten mit sich bringt, die Frühdruckfestigkeiten reduzieren, das Abbinden verzögern, und die Qualität der ausgehärteten Bindemittelzusammensetzung beeinträchtigen kann. Bei sehr hohem Dispergiermittelgehalt kann beispielsweise ein zu harscher oder rauer Beton resultieren.

Eine weitere Massnahme besteht darin, der Bindemittelzusammensetzung mehr Wasser zuzugeben. Dies führt jedoch zu reduzierten Festigkeiten der ausgehärteten Bindemittelzusammensetzung, was ebenfalls unerwünscht ist.

Auch möglich ist es, andere Dispergiermittel einzusetzen, beispielsweise Ligninsulfonate, welche auf die unterschiedlichen Qualitäten der Zuschlagstoffe weniger empfindlich reagieren. Üblicherweise ist aber die maximal erreichbare Wasserreduktion mit derartigen Dispergiermitteln massiv geringer.

Bekannt sind auch spezielle Zusatzmittel, sogenannte Tonblocker, welche die negativen Auswirkungen der tonhaltigen Mineralien teilweise neutralisieren. Aus der WO 2006/032786 A2 (Lafarge) ist diesbezüglich z.B. die Verwendung von kationischen Polymeren bekannt. Kationische Polymere sind jedoch teilweise nicht mit preisgünstigen Betonverflüssigern wie Ligninsulfonaten oder sulfonierten Naphthalin-Formaldehyd-Kondensaten verträglich, da sich Ausfällungen bilden können. Dadurch entfällt die Möglichkeit, Ligninsulfonate bzw. sulfonierte Naphthalin-Formaldehyd-Kondensate im Gemisch mit Polycarboxylatethern mit kationischen Tonblockern zu kombinieren.

Aus der EP 2 341 039 A1 (Sika Technology AG) bekannt ist des Weiteren die Verwendung eines Additivs, das ausgewählt ist aus primären, sekundären, tertiären Alkylaminen und quartären Alkylammoniumverbindungen, die gegebenenfalls jeweils mindestens eine Hydroxygruppe und/oder Ethergruppe aufweisen, zur Verbesserung der Verarbeitbarkeit von tonhaltigen Gipszusammensetzungen, die mindestens ein Kammpolymer enthalten. Die Additive weisen beispielsweise eine Struktur der Formel R1-NH2, R2-NH-R2' oder NH2-R3-NH2 auf, wobei R1, R2, R2' und R3 Alkylreste mit 1 - 200 bzw. 1 - 150 C-Atomen sind. Erwähnt ist beispielsweise die Verwendung von Diaminobutan. Bevorzugt handelt es sich bei den Alkylaminen um Polyetheramine, insbesondere Polyethermonoamine oder Polyetherdiamine, z.B. Jeffamine, oder um Alkylamine, welche Imingruppen aufweisen.

Es besteht somit nach wie vor Bedarf nach verbesserten Lösungen für die vorstehend genannten Probleme.

## Darstellung der Erfindung

Aufgabe der vorliegenden Erfindung ist es daher, die vorstehend genannten Probleme zu überwinden. Insbesondere soll eine Lösung gefunden werden, welche die Verwendung von qualitativ minderwertigen Zuschlagstoffen in mineralischen Bindemittelzusammensetzungen bei möglichst geringem Wasser- und/oder Dispergiermittelbedarf ermöglicht. Dies insbesondere auch bei Verwendung von Zuschlagstoffen, welche hohe Anteile an Tonen aufweisen. Dabei wird eine möglichst gute und über längere Zeit haltbare Verarbeitbarkeit der mineralischen Bindemittelzusammensetzungen angestrebt. Dies möglichst ohne die Frühdruckfestigkeiten von angemachten Bindemittelzusammensetzungen zu beeinträchtigen. Die Lösung soll zudem soweit als möglich unabhängig von der Art und Qualität der Zuschlagstoffe sowie im Besonderen auch bei Verwendung von Polycarboxylatethern als Dispergiermittel funktionieren.

Überraschenderweise wurde gefunden, dass diese Aufgabe durch die Verwendung nach Anspruch 1 erreicht werden kann.

Wie sich gezeigt hat, kann durch die erfindungsgemässe Verwendung der Aminverbindung der Wasserbedarf und/oder der Dispergiermittelbedarf in mineralischen Bindemittelzusammensetzungen enthaltend Tonmineralien bei der Verwendung von Polycarboxylatethern als Dispergiermittel bei verbesserter Wirkung des Dispergiermittels signifikant reduziert werden. Zudem kann eine gute und teilweise bessere Verarbeitbarkeit der mineralischen Bindemittelzusammensetzungen erreicht werden, welche über längere Zeit bestehen bleibt. Des Weiteren beeinträchtigen die erfindungsgemäss verwendeten Aminverbindungen die Frühdruckfestigkeiten von mineralischen Bindemittelzusammensetzungen kaum bis gar nicht.

Ohne an eine Theorie gebunden zu sein, wird davon ausgegangen, dass die erfindungsgemäß verwendeten Aminverbindungen als Tonblocker wirken. In mineralischen Bindemittelzusammensetzungen, welche z.B. tonhaltige, quellende Sande enthalten, lässt sich dadurch eine Inertisierung der quellenden Tonmineralien erreichen. Da die Tonmineralien den Tonblocker und nicht mehr die Dispergiermittel, insbesondere Polycarboxylatether, absorbieren, steht letzteres mehr oder weniger vollständig zur Dispergierung von Bindemittel zur Verfügung, was sich positiv auf die Verarbeitungseigenschaften der mineralischen Bindmittelzusammensetzung auswirkt

Weitere Aspekte der vorliegenden Erfindung sind Gegenstand der unabhängigen Ansprüche. Besonders vorteilhafte Ausgestaltungen der Erfindung ergeben sich aus den Unteransprüchen.

## Wege zur Ausführung der Erfindung

Ein erster Aspekt der vorliegenden Erfindung betrifft die Verwendung einer Aminverbindung zur Inertisierung von Tonmineralien gegenüber Dispergiermitteln in einer mineralischen Bindemittelzusammensetzung enthaltend Tonmineralien und/oder zur Verbesserung oder Erhöhung der Wirkung eines Dispergiermittels in einer mineralischen Bindemittelzusammensetzung enthaltend Tonmineralien, wobei die Aminverbindung Bis-(hexamethylen)-triamin und/oder 1,6-Diaminohexan umfasst und wobei die Aminverbindung wenigstens teilweise, insbesondere vollständig in Form eines Salzes vorliegt, und zudem das Dispergiermittel einen Polycarboxylatether beinhaltet.

Mit dem Begriff "Dispergiermittel" ist im vorliegenden Zusammenhang insbesondere ein Verflüssiger gemeint. Dies ist eine Substanz, welche, falls einer mineralischen Bindemittelzusammensetzung zugegeben, die Fliessfähigkeit oder Verarbeitbarkeit der mit Wasser angemachten mineralischen Bindemittelzusammensetzung zu verbessern vermag. Dies im Vergleich zu einer mineralischen Bindemittelzusammensetzung, welche das Dispergiermittel bzw. den Verflüssiger nicht enthält, ansonsten aber die gleiche Zusammensetzung aufweist. Die Fliessfähigkeit oder die Verarbeitbarkeit wird insbesondere durch das Setzmass gemäss Norm EN 12350-2 beurteilt.

Mit "Ton" oder "Tonmineralien" sind vorliegend insbesondere quellfähige Tone gemeint. Insbesondere handelt es sich bei den Tonen um Schichtsilikate, insbesondere quellfähige Schichtsilikate. Letztere werden auch Phyllosilikate genannt. Deratige Tone sind im vorliegenden Zusammenhang besonders problematisch. Im Besonderen enthalten die Tone oder Tonmineralien Bentonite und/oder Mineralien der Smektitgruppe, insbesondere Montmorrillonit. "Inertisierung von Tonmineralien gegenüber Dispergiermitteln" meint vorliegend insbesondere, eine Verminderung der chemischen Affinität und/oder Absorptionsfähigkeit der Tonmineralien gegenüber Dispergiermitteln. Dies kann entsprechend auch als "Tonblockierung" bezeichnet werden.

Mit dem Ausdruck "Verbesserung der Wirkung eines Dispergiermittels" ist insbesondere gemeint, dass eine durch das Dispergiermittel in der Bindemittelzusammensetzung hervorgerufene Erhöhung der Fliessfähigkeit und/oder der Verarbeitbarkeit nochmals erhöht wird. Die erfindungsgemäß verwendete Aminverbindung ist also eine Substanz, welche, falls einer mineralischen Bindemittelzusammensetzung enthaltend das Dispergiermittel und Tone zugegeben, die Fliessfähigkeit oder Verarbeitbarkeit der mit Wasser angemachten mineralischen Bindemittelzusammensetzung zu verbessern vermag. Dies im Vergleich zu einer mineralischen Bindemittelzusammensetzung, welche die Aminverbindung nicht enthält, ansonsten aber die gleiche Zusammensetzung aufweist.

Entsprechend wird die Aminverbindung insbesondere zur Verbesserung oder Erhöhung der Fliessfähigkeit und/oder Verarbeitbarkeit einer mineralischen Bindemittelzusammensetzung enthaltend das erfindungsgemäß verwendeten Dispergiermittel und Tonmineralien verwendet.

Wie es sich gezeigt hat, kann mit der erfindungsgemäß verwendeten Aminverbindung zudem die Verarbeitungszeit von mineralischen Bindemittelzusammensetzungen verlängert werden. Darunter wird insbesondere verstanden, dass das Ausbreitmass oder Setzmass einer ersten mineralischen Bindemittelzusammensetzung, welche mit der Aminverbindung behandelt wurde, mit der Zeit weniger stark abnimmt als das Ausbreitmass oder Setzmass einer zweiten mineralischen Bindemittelzusammensetzungen, welche keine erfindungsgemäß verwendete Aminverbindung enthält, ansonsten aber eine identische Zusammensetzung aufweist wie die erste mineralischen Bindemittelzusammensetzung.

Die erfindungsgemäß verwendete Aminverbindung kann daher im Besonderen zur Verlängerung der Verarbeitungszeit und/oder zur Verlängerung der Verarbeitbarkeit der mineralischen Bindemittelzusammensetzung enthaltend das Dispergiermittel und Tonmineralien verwendet werden.

Bevorzugt wird die Aminverbindung somit zur Verbesserung und/oder Verlängerung der Verarbeitbarkeit oder Fliessfähigkeit der mineralischen Bindemittelzusammensetzung enthaltend das Dispergiermittel und Tonmineralien verwendet.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Unter einem "zementösen Bindemittel" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Eine "mineralische Bindemittelzusammensetzung" bezeichnet entsprechend eine Zusammensetzung enthaltend ein mineralisches Bindemittel und allenfalls weitere Komponenten, wie z.B. Aggregate, Wasser und/oder Zusatzmittel. Zusatzmittel sind im vorliegenden Zusammenhang insbesondere Betonzusatzmittel und/oder Zusatzmittel nach Norm EN 934-2.

Insbesondere enthält das mineralische Bindemittel oder die mineralische Bindemittelzusammensetzung ein hydraulisches Bindemittel, bevorzugt Zement. Besonders bevorzugt ist ein Zement mit einem Zementklinkeranteil von $\geq$ 35 Gew.-%. Insbesondere ist der Zement vom Typ CEM I, CEM II und/oder CEM III (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu $\geq$ 95 Gew.-% aus hydraulischem Bindemittel, insbesondere aus Zementklinker.

Es kann aber auch vorteilhaft sein, wenn das Bindemittel oder die Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Ein Anteil an mineralischem Bindemittel beträgt insbesondere 1 - 100 Gew.-%, insbesondere 5 - 50 Gew.-%, speziell 10 - 30 Gew.-%, bezogen auf das Gesamtgewicht der mineralischen Bindemittelzusammensetzung.

In einer weiteren bevorzugten Ausführungsform enthält die Bindemittelzusammensetzung zusätzlich feste Aggregate, insbesondere Kies, Sand und/oder Gesteinskörnungen. Dabei handelt es sich insbesondere um tonhaltige Sande, tonhaltigen Kies und/oder tonhaltige Gesteinskörnungen. Entsprechende Bindemittelzusammensetzungen können beispielsweise als Mörtelmischungen oder Betonmischungen eingesetzt werden.

Die Aggregate weisen bevorzugt einen Anteil von 5 - 95 Gew.-%, insbesondere 50 - 90 Gew.-%, speziell 60 - 85 Gew.-%, bezogen auf das Gesamtgewicht der mineralischen Bindemittelzusammensetzung auf.

Ein Tongehalt der Aggregate liegt insbesondere im Bereich von 0.001 - 5 Gew.-%, insbesondere 0.1 - 4 Gew.-%, speziell 0.3 - 3.5 Gew.-%, im Besonderen 0.5 - 3.5 Gew.-% oder 1 - 3 Gew.-%. Der Tongehalt der Aggregate wird insbesondere durch die Rietveld-Methode, welche auf Röntgenbeugung (XRD) beruht, bestimmt. Dieses Verfahren ist dem Fachmann an sich bekannt.

Als Mass für den Tongehalt der Aggregate kann auch der sogenannte Methylenblauwert (MBV), insbesondere

für die Kornklasse 0-75 µm, herangezogen werden. Dieser kann insbesondere gemessen werden nach dem Standard der International Slurry Surfacing Association (ISSA, Annapolis Maryland), Technical Bulletin No. 145 "Test Method for Determination of Methylene Blue Adsorption Value (MBV) of Mineral Aggregate Fillers and Fines" (Issued 1989; 1st Revision 2005). Je höher beispielsweise der Gehalt an quellfähigen Tonen oder Tonmineralien in den Aggregaten ist, desto grösser ist der Methylenblauwert und desto geringer die Qualität der Aggregate.

Insbesondere enthält die Bindemittelzusammensetzung zusätzlich Wasser, wobei ein Gewichtsverhältnis von Wasser zu mineralischem Bindemittel bevorzugt im Bereich von 0.25 - 0.9, insbesondere 0.3 - 0.8, bevorzugt 0.35 - 0.7, liegt. Derartige Bindemittelzusammensetzungen lassen sich als Mörtelmischungen oder Betonmischungen direkt verarbeiten.

Die Aminverbindung wird teilweise oder vollständig als Salz, insbesondere als Salz einer Säure, verwendet.

Insbesondere ist es möglich, die Aminverbindung als Reinsubstanz, z.B. mit einer Reinheit von ≥ 95 Gew.-%, einzusetzen.

Es ist aber auch möglich die Aminverbindung in Form eines Gemischs zusammen mit weiteren Substanzen einzusetzen. Dies können z.B. Lösungsmittel, Prozesschemikalien und/oder Additive wie Entschäumer, Konservierungsmittel Farbstoffe, Betonzusatzmittel, Mörtelzusatzmittel und dergleichen sein. Betonzusatzmittel oder Mörtelzusatzmittel können z.B. Schwindreduzierer sein.

Gegebenenfalls kann die Aminverbindung auch in Kombination mit anderen Substanzen eingesetzt werden, welche dazu geeignet sind, durch Ton adsorbiert zu werden oder welche selbst den Ton dispergieren. Solche Substanzen sind beispielsweise anorganische oder organische Kationen, polare organische Moleküle, Tondispergiermittel oder Mischungen davon. Besonders geeignete Substanzen sind beispielsweise kationische Polymere, insbesondere solche mit einer Dichte an kationischen Ladungen von über 0.5 meq/g und einer intrinsischen Viskosität von unter 1 dl/g. Die Messung der intrinsischen Viskosität erfolgt dabei typischerweise in einer NaCl-Losung (3 mol/l) mit einem Kapillarviskosimeter des Ubbelhode-Typs bei 25°C. Diese kationischen Polymere auch mit anionischen Polymeren kombiniert werden.

Auch möglich ist es, ein Gemisch in Form eines technischen Produkts enthaltend die Aminverbindung sowie Nebenprodukte zu verwenden. Bei Verwendung der Aminverbindung in Form eines Gemischs, beträgt ein Anteil der Aminverbindung im Gemisch mit Vorteil wenigstens 30 Gew.-%, insbesondere wenigstens 40 Gew.-%, bevorzugt wenigstens 50 Gew.-% oder wenigstens 65 Gew.-%.

Bevorzugt liegt das Gemisch als Lösung oder Dispersion vor. Bevorzugt sind wässrige Lösungen und/oder Dispersionen.

Beispielsweise wird die Aminverbindung in Form einer wässrigen Lösung eingesetzt, wobei insbesondere die wässrige Lösung einen pH von 2 - 12, insbesondere < 7, bevorzugt von 2 - 6 oder von 3 - 5, aufweist.

Bis-(hexamethylen)-triamin wird auch als 6,6'-Iminodihexylamine oder Bis(6-aminohexyl)amine bezeichnet und hat sich vorliegende als ganz besonders vorteilhaft herausgestellt. Insbesondere ermöglicht diese Substanz eine starke und lang anhaltende Verbesserung der Verflüssigungswirkung von Polycarboxylatethern in tonhaltigen Bindemittelzusammensetzungen. Zudem ist Bis-(hexamethylen)-triamin als Nebenprodukt bei der Herstellung von Rohstoffen für die Nylonproduktion in grossen Mengen und kostengünstig verfügbar.

Insbesondere wird die Aminverbindung in Form eines Gemischs umfassend Bis-(hexamethylen)-triamin und Hexamethylenediamin eingesetzt. Die beiden Amine liegen dabei mit Vorteil wenigstens teilweise, insbesondere vollständig, als Salze vor. Ein Gewichtanteil an Bis-(hexamethylen)-triamin im Gemisch ist zudem mit Vorteil grösser als ein Gewichtsanteil an Hexamethylenediamin. Entsprechende Gemische sind bei verschiedenen Herstellern kommerziell erhältlich.

Die Aminverbindung liegt wenigstens teilweise, insbesondere vollständig in Form eines Salzes vor. Insbesondere handelt es sich dabei um ein Ameisensäure-, Essigsäure, Milchsäure, Adipinsäure-, Maleinsäure-, Fumarsäure-, Bernsteinsäure-, Salzsäure, Schwefelsäure, Phosphorsäure, Methaphosphorsäure und/oder Polyphosphorsäuresalz der Aminverbindung.

Besonders bevorzugt sind Essigsäure-, Adipinsäure- und/oder Ameisensäuresalze der Aminverbindung, im Speziellen Adipinsäure- und/oder Ameisensäuresalze der Aminverbindung.

Besonders bevorzugt beinhaltet die Aminverbindung ein Adipinsäuresalz von 1,6-Diamonhexan und/oder ein Ameinsensäuresalz von Bis-(hexamethylen)-tri-amin.

Ein Gewichtsverhältnis von Säure zu Aminverbindung in den vorstehend genannten Salzen beträgt mit Vorteil 75:25 - 25:75, insbesondere 60:40 - 40:60, im Speziellen 50:50.

Die Aminverbindung wird vorteilhafterweise in einer Menge von 0.01 - 10 Gew.-%, insbesondere 0.02 - 4 Gew.-%, bevorzugt 0.03 - 1 Gew.-% oder 0.2 - 0.9 Gew.-%, jeweils bezogen auf den Gehalt an mineralischem Bindemittel, verwendet.

Das Dispergiermittel beinhaltet einen Polycarboxylatether. In Kombination mit Polycarboxylatethern bewirken die erfindungsgemäss verwendeten Aminverbindungen eine besonders effektive Verbesserung der Fliessfähigkeit und Verlängerung der Verarbeitbarkeit von mineralischen Bindemittelzusammensetzungen enthaltend Tonmineralien.

Der Polycarboxylatether weist insbesondere über Ester-, Ether-, Amid- und/oder Imidgruppen an eine Hauptkette angebundene Seitenketten auf. Bevorzugt sind Ester-, Ether- und/oder Amidgruppen, insbesondere Ester und/oder Ethergruppen. Die Hauptkette weist mindestens eine Säureeinheit oder ein Salz davon auf. Die Säureeinheit ist insbesondere eine $\alpha$-ungesättigte Mono- oder Dicarbonsäure, wie Acrylsäure, Methacrylsäure, Maleinsäureanhydrid, Maleinsäure, Itaconsäure, Crotonsäure oder Fumarsäure. Die Säureeinheit ist bevorzugt Acrylsäure, Methacrylsäure, Maleinsäure und/oder ein Salz davon und/oder Kombinationen davon.

Insbesondere enthalten die Seitenketten Polyalkylenoxid-Seitenketten, bevorzugt Polyethylenoxideinheiten. Bevorzugt weisen wenigstens 50 Mol-%, insbesondere wenigstens 75 Mol-%, bevorzugt wenigstens 95 Mol-% oder 100 Mol-% der Seitenketten Polyalkylenoxid auf oder bestehen daraus.

Bevorzugt beträgt ein Anteil an Ethylenoxideinheiten in den Polyalkylenoxid-Seitenketten, bezogen auf sämtliche in den Seitenketten vorhandenen Alkylenoxideinheiten, mehr als 90 Mol-%, insbesondere mehr als 95 Mol-%, bevorzugt mehr als 98 Mol-%, im Speziellen 100 Mol-%.

Bevorzugt weisen die Polyalkylenoxid-Seitenketten keine hydrophoben Gruppen auf, insbesondere keine Alkylenoxide mit drei oder mehr Kohlenstoffatomen. Ein hoher Anteil an Ethylenoxideinheiten oder ein geringer Gehalt an Alkylenoxiden mit drei oder mehr Kohlenstoffatomen reduziert die Gefahr von unerwünschtem Lufteintrag.

Die Polyalkylenoxid-Seitenketten weisen insbesondere eine Struktur gemäss Formel $-[AO]_n-R^a$ auf. Dabei ist insbesondere A = $C_2$- bis $C_5$-Alkylen, das verzweigt oder unverzweigt sein kann. $R^a$ steht bevorzugt für H, eine $C_1$- bis $C_{20}$-Alkylgruppe, -Cyclohexylgruppe oder -Alkylarylgruppe. Mit Vorteil ist n = 2 bis 300, insbesondere 3 bis 200 oder 5 bis 150.

Ein gewichtsgemitteltes Molekulargewicht ($M_w$) des Polycarboxylatethers beträgt insbesondere 5'000 - 150'000 g/mol, bevorzugt 10'000 - 100'000 g/mol. Ein zahlengemitteltes Molekulargewicht ($M_n$) des Polycarboxylatethers beträgt mit Vorteil 3000 - 100'000 g/mol, insbesondere 8'000 - 70'000 g/mol. Das gewichtsgemittelte Molekulargewicht wird durch Gel-Permeations-Chromatographie (GPC) mit Polyethylenglycol (PEG) als Standard bestimmt. Diese Technik ist dem Fachmann an sich bekannt.

Der Polycarboxylatether umfasst bevorzugt folgende Teilstruktureinheiten oder besteht daraus:

a) a Molanteile einer Teilstruktureinheit **S1** der Formel Ia

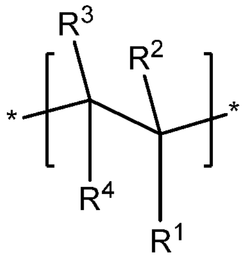

(Ia)

b) b Molanteile einer Teilstruktureinheit **S2** der Formel Ib

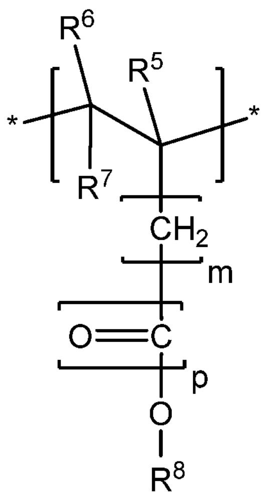

(Ib)

c) optional c Molanteile einer Teilstruktureinheit **S3** der Formel Ic

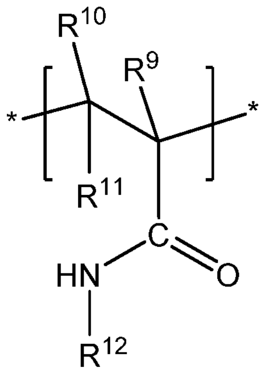

(Ic)

d) optional d Molanteile einer Teilstruktureinheit **S4** der Formel Id

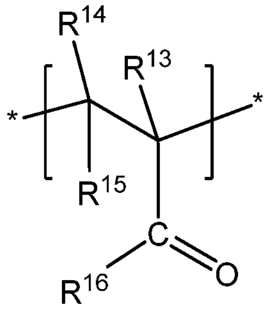

(Id)

wobei

$R^1$, jeweils unabhängig voneinander, für -COOM, $-SO_2-OM$,

$-O-PO(OM)_2$ und/oder $-PO(OM)_2$ steht,

$R^2$, $R^3$, $R^5$, $R^6$, $R^9$, $R^{10}$, $R^{13}$ und $R^{14}$ jeweils unabhängig voneinander, für H oder eine Alkylgruppe mit 1 bis 5 Kohlenstoffatomen stehen,

$R^4$, $R^7$, $R^{11}$ und $R^{15}$, jeweils unabhängig voneinander, für H, -COOM oder eine Alkylgruppe mit 1 bis 5 Kohlenstoffatomen stehen,

M, unabhängig voneinander, $H^+$, ein Alkalimetallion, ein Erdalkalimetallion, ein zwei oder dreiwertiges Metallion, ein Ammoniumion, eine organische Ammoniumgruppe,

m = 0, 1 oder 2 ist,

p = 0 oder 1 ist,

$R^8$ und $R^{12}$, jeweils unabhängig voneinander, für eine $C_1$- bis $C_{20}$-Alkylgruppe, -Cycloalkylgruppe, -Alkylarylgruppe oder für eine Gruppe der Formel $-[AO]_n-R^a$ steht,

wobei A = $C_2$- bis $C_4$-Alkylen, $R^a$ für H, eine $C_1$- bis $C_{20}$-Alkylgruppe, - Cycloalkylgruppe oder -Alkylarylgruppe steht,

und n = 2 bis 300, insbesondere 3 bis 200 oder 5 bis 150,

$R^{16}$, unabhängig voneinander, für $NH_2$, $-NR^bR^c$, $-OR^dNR^eR^f$ stehen, wobei $R^b$ und $R^c$, unabhängig voneinander, für eine $C_1$- bis $C_{20}$-Alkylgruppe, -Cycloalkylgruppe, -Alkylarylgruppe oder-Arylgruppe stehen, oder für eine Hydroxyalkylgruppe oder für eine Acetoxyethyl- ($CH_3-CO-O-CH_2-CH_2-$) oder eine Hydroxy-isopropyl- ($HO-CH(CH_3)-CH_2-$) oder eine Acetoxyisopropylgruppe ($CH_3-CO-O-CH(CH_3)-CH_2-$) stehen; oder $R^b$ und $R^c$ bilden zusammen einen Ring, von dem der Stickstoff ein Teil ist, um einen Morpholin- oder Imidazolinring aufzubauen;

$R^d$ eine $C_2$ -$C_4$-Alkylengruppe ist,

$R^e$ und $R^f$ je unabhängig voneinander eine $C_1$- bis $C_{20}$-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1**, **S2**, **S3** und **S4** darstellen, mit

$$a/b/c/d = (0.05 – 0.95) / (0.05 – 0.8) / (0 – 0.3) / (0 – 0.3),$$

$$\text{insbesondere } a/b/c/d = (0.3 – 0.9) / (0.1 – 0.6) / (0 – 0.15) / (0 – 0.15),$$

$$\text{bevorzugt } a/b/c/d = (0.5 – 0.8) / (0.2 – 0.5) / (0 – 0.1) / 0$$

und mit der Maßgabe, dass a + b + c + d = 1 ist.

Die Abfolge der Teilstruktureinheiten **S1**, **S2**, **S3** und **S4** kann alternierend, blockartig oder zufällig sein. Weiter ist es auch möglich, dass zusätzlich zu den Teilstruktureinheiten **S1**, **S2**, **S3** und **S4** weitere Teilstruktureinheiten vorliegen.

Bevorzugt weisen die Teilstruktureinheiten **S1**, **S2**, **S3** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtgewicht des Polycarboxylatethers auf.

Ein Verhältnis von a/(b+c+d) = liegt insbesondere im Bereich von 1 - 5.

Insbesondere sind im Polycarboxylatether $R^1$ = COOM, $R^2$ = H oder $CH_3$, $R^3$ = $R^4$ = H. Damit lässt sich der Polycarboxylatether auf der Basis von Acryl- oder Methacrylsäuremonomeren herstellen, was aus ökonomischer Sicht interessant ist.

Ebenfalls vorteilhaft sind Polycarboxylatether mit $R^1$ = COOM, $R^2$ = H, $R^3$ = H und $R^4$ = COOM. Solche Polycarboxylatether lassen sich auf der Basis von Maleinsäuremonomeren herstellen.

Vorteilhafterweise sind $R^5$ = H oder $CH_3$ und $R^6$ = $R^7$ = H. Derartige Polycarboxylatether lassen sich z.B. ausgehend von (Meth)acrylsäureestern, Vinyl-(Meth)allyl- oder Isoprenolethern herstellen.

Falls **S3** vorhanden ist, sind insbesondere $R^9$ = H oder $CH_3$ und $R^{10}$ = $R^{11}$ = H.

Falls **S4** vorhanden ist, sind insbesondere $R^{13}$ = H oder $CH_3$ und $R^{14}$ = $R^{15}$ = H.

Ganz besonders vorteilhaft stehen $R^2$ und $R^5$ für Mischungen aus H und -$CH_3$. Bevorzugt sind dabei Mischungen mit 40 - 60 Mol-% H und 40 - 60 Mol-% - $CH_3$. Falls die entsprechenden Teilstruktureinheiten vorhanden sind, gilt dies insbesondere auch für $R^9$ und $R^{13}$. Dabei ist zudem bevorzugt $R^3$ und $R^6$ gleich H, sowie, falls die entsprechenden Teilstruktureinheiten vorhanden sind, $R^9$ und $R^{13}$ gleich H.

Gemäß weiteren vorteilhaften Ausführungsform ist $R^1$ = COOM, $R^2$ = H, $R^5$ = - $CH_3$ und $R^3$ = $R^4$ = $R^6$ = $R^7$ = H.

Bei einer anderen vorteilhaften Ausführungsform ist $R^1$ = COOM, $R^2$ = $R^5$ = H oder -$CH_3$ und $R^3$ = $R^4$ = $R^6$ = $R^7$ = H.

Insbesondere steht $R^8$ und/oder $R^{12}$ für -$[AO]_n$-$R^a$, wobei bevorzugt A = $C_2$-Alkylen und/oder $R^a$ für H oder eine $C_1$-Alkylgruppe steht. Vorteilhafterweise ist n = 2 - 300, insbesondere n = 3 - 200, bevorzugt n = 5 - 150.

Im Besonderen ist m = 0 und p = 1. Ebenfalls vorteilhaft ist m = 1 oder 2 und p = 0, wobei insbesondere $R^5$ für -$CH_3$ steht.

Bei besonders bevorzugten Polycarboxylatethern gilt:

a) $R^1$ steht für COOM;

b) $R^2$ und $R^5$ stehen, unabhängig voneinander, für H, -$CH_3$ oder Mischungen daraus. Ganz besonders vorteilhaft stehen $R^2$ und $R^5$ dabei für Mischungen aus H und -$CH_3$. Bevorzugt sind dabei Mischungen mit 40 - 60 Mol-% H und 40 - 60 Mol-% -$CH_3$. Bei vorhandene Teilstruktureinheiten **S3** und/oder **S4** gilt dies insbesondere auch für $R^9$ und $R^{13}$;

c) $R^3$ und $R^6$ stehen für H. Bei vorhandenen Teilstruktureinheiten **S3** und/oder **S4** gilt dies insbesondere auch für $R^{10}$ und/oder $R^{14}$;

d) $R^4$ und $R^7$ stehen, unabhängig voneinander, für H oder -COOM, bevorzugt für H. Bei vorhandene Teilstruktureinheiten **S3** und/oder **S4** gilt dies insbesondere auch für $R^{11}$ und $R^{15}$;

e) $R^8$ steht für $-[AO]_n-R^a$, wobei bevorzugt A = $C_2$-Alkylen und/oder $R^a$ für H oder eine $C_1$-Alkylgruppe steht. Vorteilhafterweise ist n = 2 - 300, insbesondere n = 3 - 200, bevorzugt n = 5 - 150. Bei vorhandener Teilstruktureinheit **S3** gilt dies insbesondere auch für $R^{12}$,

f) m = 0 und p = 1.

Die Polycarboxylatether lassen sich in an sich bekannter Weise herstellen. Dabei werden insbesondere die polymeranaloge Reaktion oder die radikalische Polymerisation verwendet.

Die Polycarboxylatether können nach der polymeranalogen Reaktion hergestellt werden. Dabei wird zunächst eine Hauptkette hergestellt, die dann mit Seitenketten ausgestattet wird. Polymeranaloge Umsetzungen sind an sich bekannt und werden beispielsweise in WO97/35814A1, WO95/09821A2,

DE 100 15 135A1, EP 1138697A1, EP1348729A1 sowie WO2005/090416A1 beschrieben. Details zur polymeranalogen Umsetzung werden beispielsweise offenbart in EP 1 138 697 B1 auf Seite 7 Zeile 20 bis Seite 8 Zeile 50, sowie in den darin enthaltenen Beispielen, oder in EP 1 061 089 B1 auf Seite 4, Zeile 54 bis Seite 5 Zeile 38 sowie in den Beispielen.

Die Polycarboxylatether können auch durch eine radikalische Polymerisationsreaktion hergestellt werden, bei der das Copolymer aus entsprechenden ethylenisch ungesättigten Säure-, Ester- und Amidmonomeren in Gegenwart eines Radikalbildners erhalten wird. Diese Technik ist dem Fachmann an sich bekannt.

Die Aminverbindung kann bei der erfindungsgemässen Verwendung vor, während und/oder nach dem Anmachen der mineralischen Bindemittelzusammensetzung zugegeben werden. Bei einer Zugabe vor dem Anmachen kann die Aminverbindung beispielsweise einer Komponente der mineralischen Bindemittelzusammensetzung zugegeben werden, z.B. dem Bindemittel, den Aggregaten einem Zusatzmittel und/oder dem Anmachwasser.

Das in der mineralischen Bindemittelzusammensetzung verwendete Dispergiermittel kann ebenfalls vor, während und/oder nach dem Anmachen der mineralischen Bindemittelzusammensetzung zugegeben werden.

Die Aminverbindung und das Dispergiermittel können dabei zeitgleich oder zeitlich versetzt zugegeben werden. Beispielsweise kann die Aminverbindung und das Dispergiermittel gemeinsam dem Anmachwasser beigemischt werden. Ebenfalls möglich ist es, die Aminverbindung und das Dispergiermittel in Form eines Zusatzmittels, z.B. einer wässrigen Lösung, vorzumischen und beim Anmachen der Bindemittelzusammensetzung beizugeben. Möglich ist es aber z.B. auch, die Aminverbindung bereits vorghängig den Aggregaten beizugeben und das Dispergiermittel erst mit dem Anmachwasser beim Anmachen der Bindemittelzusammensetzung beizugeben.

Hinsichtlich der Verwendungsform kann die Aminverbindung beispielsweise in Form eines Zusatzmittels, als Formulierungskomponente eines Zusatzmittels, z.B. eines Polycarboxylatether-basierten Betonverflüssigers, und/oder als Beschichtungsmittel für die (Vor)-Behandlung tonhaltiger Aggregate, z.B. saugender Sande, eingesetzt werden.

Falls die mineralische Bindemittelzusammensetzung nebst Tonmineralien Recyclingzuschlagstoffe und/oder Zuschlagstoffe mit hohen Anteilen an Feinstoffen aufweist, kann es vorteilhaft sein, zusammen mit der Aminverbindung zusätzlich Zucker (Kristallzucker, Saccharose), Melassen und/oder karamellisierten Zucker einzusetzen. Karamellisierter Zucker hat sich dabei als besonders bevorzugt herausgestellt.

"Feinanteile" oder "Feinstoffe" bezeichnen vorliegend Feststoffe mit einer Partikelgrösse $\leq$ 125 $\mu$m. Die Partikelgrösse kann z.B. durch Siebanalyse mit einem Sieb mit quadratischen Öffnungen (125 $\times$ 125 $\mu$m Öffnungen) bestimmt werden. Die Feinanteile sind insbesondere inerte Feststoffe und/oder Feststoffe, welche keine mineralischen Bindemittel sind. "Recyclingmaterial" ist insbesondere gebrochenes und gewaschenes Abbruchmaterial. Sowohl Feinstoffe als auch Recyclingmaterial können wie Tonmineralien den Wasser- und Dispergiermittelbedarf in mineralischen Bindemittelzusammensetzungen massiv beeinflussen.

Sofern nebst Tonmineralien auch Recyclingzuschlagstoffe und/oder Zuschlagstoffe mit hohen Anteilen an Feinstoffen vorliegen, weisen die Zuschlagstoffe in der mineralischen Bindemittelzusammensetzung bevorzugt eine Wasseraufnahme gemäss Norm DIN EN 1097-6:2000 + AC:2002 + A1:2005 von 0 - 5 Gew.-%, insbesondere 0.1 - 4 Gew.-%, speziell 0.2 - 4 Gew., im Besonderen 0.4 - 3.5 Gew.-% oder 0.5 - 3 Gew.-%, auf (Wasseraufnahme bezogen auf die Trockenmasse der Zuschlagstoffe).

Falls in der mineralischen Bindemittelzusammensetzung Zuschlagstoffe mit Feinanteilen vorliegen, weisen die Zuschlagstoffe im Besonderen einen Gehalt an Feinanteilen von 0.001 - 40 Gew.-%, insbesondere 1 - 35, speziell 1.5 - 30 Gew.-% oder 3 - 30 Gew.-%, bezogen auf das Gesamtgewicht aller Zuschlagstoffe auf.

Der Ausdruck "karamellisierter Zucker" steht vorliegend insbesondere für Bräunungsprodukte, welche durch Wärmebehandlung oder Erhitzen von Zucker erhältlich sind.

Im Speziellen handelt es sich um eine trockene Wärmebehandlung oder ein trockenes Erhitzen. Damit ist insbesondere gemeint, dass die Erhitzung in Abwesenheit einer Flüssigkeit, insbesondere in Abwesenheit von Wasser, erfolgt.

Der Begriff "Zucker" umfasst insbesondere Monosaccharide, Oligosaccharide oder Mischungen davon. Unter Oligosacchardien sind vorliegend Saccharide zu verstehen, welche aus 2 - 10 gleichen oder verschiedenen Monosacchariden (Einfachzuckern) aufgebaut und durch glycosidische Bindungen miteinander verbunden sind. Entsprechend handelt es sich beim karamellisierten Zucker insbesondere um karamellisierte Monosaccharide und/oder karamellisierte Oligosaccharide.

Als Zucker, welche als Ausgangstoffe für die Herstellung der karamellisierten Zucker dienen, können Monosaccharide, Oligosaccharide und/oder Mischungen davon verwendet werden. Diese können z.B. in Form von Glucosesirup, Fructose, Lactose, Dextrose, Invertzucker, Sucrose, Maissirup, Malzsirup, Melasse und/oder hydrolysierte Stärke vorliegen. Es sind aber auch andere Formen von Zucker möglich.

Die Wärmebehandlung des Zuckers erfolgt insbesondere bei Atmosphärendruck (1 bar) und an Luft bzw. in Erdatmosphäre.

Der Zucker wird bei der Wärmebehandlung typischerweise auf Temperaturen von 110 - 180°C erhitzt. Der Zucker wird dabei insbesondere so lange erhitzt, bis eine Braunfärbung eintritt.

Im Besonderen wird der Zucker so lange erhitzt, bis karamellisierter Zucker mit den nachstehend definierten Farbintensitäten und/oder Farbtönen erhalten wird.

Bevorzugt weist der karamellisierte Zucker bei einer Wellenlänge von 610 nm eine Farbintensität von 0.005 - 0.65, insbesondere 0.008 - 0.35, bevorzugt 0.01 - 0.20 oder 0.025 - 0.09, auf.

Insbesondere weist der karamellisierte Zucker bei einer Wellenlänge von 560 nm eine Farbintensität von 0.01 - 0.70, insbesondere 0.03 - 0.45, bevorzugt 0.05 - 0.30 oder 0.06 - 0.20, auf.

Die Farbintensität ist dabei definiert als die Absorptivität einer wässrigen Lösung enthaltend 1 mg karamellisierten Zucker (Trockensubstanz) pro 1 ml Lösung (Gesamtvolumen der Lösung inklusive karamellisiertem Zucker) bei einer Wellenlänge von 610 nm und einem Lichtweg von 1 cm Länge. Die Absorptivität (engl. Absorbance) kann auch als optische Dichte oder Extinktion bezeichnet werden und steht für $-\log_{10} (I/I_0)$ oder den negativen dekadischen Logarithmus des Verhältnisses der Intensität der aus der Probe austretender Strahlung (I) zur Intensität der in die Probe eintretenden Strahlung ($I_0$).

Ein Farbton des karamellisierten Zuckers gemäss Hue-Index liegt insbesondere im Bereich von 3.0 - 8.0, im Besonderen 3.5 - 7.5, insbesondere 4.0 - 7.5, bevorzugt 5.0 - 7.2. Der Hue-Index ist dabei definiert ist als $10 \times \log_{10} (A^{510}/A^{610})$, wobei $A^{510}$ und $A^{610}$ für die Absorptivitäten bei 510 nm, respektive 610 nm stehen.

Insbesondere umfasst der karamellisierte Zucker Karamell oder er besteht daraus. "Karamell" steht vorliegend für ein ausschliesslich durch Erhitzen von Zucker, z.B. Saccharose, gewonnenes Bräunungsprodukt. Bei der Herstellung von Karamell werden insbesondere keine Reaktionsbeschleuniger oder keine weiteren Substanzen eingesetzt.

Gemäss einer weiteren vorteilhaften Ausführungsform umfasst der karamellisierte Zucker Zuckercouleur oder er besteht daraus.

Zuckercouleur ist insbesondere eine Substanz entsprechend Einecs-Verzeichnis Nr. 232-435-9 und/oder CAS-Registrierungsnummer 8028-89-5. Zuckercouleur wir auch Caramel Colour genannt.

Zuckercouleur kann analog zu Karamell hergestellt werden, wobei bei der Wärmebehandlung oder beim Karamellisieren jedoch üblicherweise zusätzlich Reaktionsbeschleuniger zugegeben werden. Dies sind z.B. Basen oder Säuren.

Insbesondere werden als Reaktionsbeschleuniger ein oder mehrere Substanzen aus der Gruppe von Natronlauge, Natriumsulfit, Kaliumsulfit, schweflige Säuren, Sulfit- und Ammoniumverbindungen eingesetzt. Je nachdem welcher Reaktionsbeschleuniger bei der Herstellung von Zuckercouleur eingesetzt wird, entstehen unterschiedlich zusammengesetzte Zuckercouleure.

Die Zuckercouleur ist insbesondere eine Zuckercouleur vom Typ INS Nr. 150, bevorzugt 150a, 150b, 150c und/oder 150d. Der Typ ist dabei entsprechend dem international anerkannten Codex Alimentarius des gemeinsamen FAO/WHO-Sachverständigenausschusses für Lebensmittelzusatzstoffe definiert (siehe z.B. Compendium Of Food Additive Specifications; Joint FAO/WHO Expert Committee on Food Additives, 74th Meeting 2011; ISBN 978-92-5-107004-8; Seiten 9 - 20). Im Europäischen Raum wird der INS-Nummer üblicherweise der Buchstabe "E" vorangestellt. Beispielsweise entspricht INS Nr. 150a in diesem Fall E150a.

Zur Herstellung von Zuckercouleur vom Typ INS Nr. 150a, auch einfache Zuckercouleur genannt, werden Natronlauge oder starke Säuren als Reaktionsbeschleuniger eingesetzt. Bei Zuckercouleur vom Typ INS Nr. 150b, auch als Sulfitlaugen-Zuckercouleur bezeichnet, werden Sulfitverbindungen, beispielsweise Natriumsulfit, Kaliumsulfit oder schweflige Säuren, als Reaktionsbeschleuniger verwendet. Bei Zuckercouleur des Typs INS Nr. 150c, auch Ammoniak-Zuckercouleur genannt, kommen Ammoniumverbindungen als Reaktionsbeschleuniger zum Einsatz. Zuckercouleur vom Typ INS Nr. 150d, auch Ammoniumsulfit-Zuckercouleur genannt, wird mit Hilfe von Sulfit- und Ammoniumverbindungen hergestellt.

Im vorliegenden Zusammenhang vorteilhaft ist Zuckercouleur vom Typ INS Nr. 150a und/oder 150d. Ganz speziell bevorzugt ist der Typ INS Nr. 150a.

Der karamellisierte Zucker wird mit Vorteil in einer Menge von 0.0005 - 10 Gew.-%, insbesondere 0.001 - 2 Gew.-%, bevorzugt 0.004 - 0.5 Gew.-%, jeweils bezogen auf den Trockengehalt des karamellisierten Zuckers und bezogen auf den Gehalt an mineralischem Bindemittel in der mineralischen Bindemittelzusammensetzung verwendet.

Mit Vorteil wird der karamellisierte Zucker in Form einer wässrigen Lösung mit einem Trockengehalt an karamellisiertem Zucker von 0.01 - 90 Gew.-%, insbesondere 10 - 80 Gew.-%, bevorzugt 25 - 75 Gew.-% oder 35 - 70 Gew.-%, verwendet. Dadurch wird insbesondere eine gute Dosierung ermöglicht.

Die Verwendung von karamellisierten Zucker in Kombination mit der Aminverbindung hat den Vorteil, dass die Wirkung von Dispergiermitteln in mineralische Bindemittelzusammensetzungen, welche nebst den Tonmineralien auch Recyclingzuschlagstoffe und/oder Zuschlagstoffen mit hohen Anteilen an Feinstoffen aufweisen, in unerwarteter Weise verbessert werden können.

Nähere Angaben zur Verwendung von karamellisiertem Zucker in mineralischen Bindemitteln finden sich in der WO 2015/059100 A1 (Sika Technology AG).

In einem zusätzlichen Aspekt betrifft die Erfindung eine Zusammensetzung umfassend eine wie vorstehend beschriebene Aminverbindung, sowie wenigstens einen Polycarboxylatether. Insbesondere umfasst die Zusammensetzung zudem einen Vertreter aus der Gruppe bestehend aus mineralischen Bindemitteln, Aggregaten und Zusatzmitteln für Mörtel und/oder Beton.

Zusatzmittel für Mörtel und/oder Beton sind dabei insbesondere Substanzen, wie sie nach EN 934-2 definiert sind. Insbesondere handelt es sich um Beschleuniger, Verzögerer, Luftporenbildner, Entschäumer, Schwindreduzierer, Korrosionsinhibitor, Konservierungsmittel, Stabilisierer und/oder Farbstoffe. Darin eingeschlossen ist auch Zucker sowie karamellisierter Zucker wie er vorstehend beschrieben wurde.

Die Zusammensetzung kann dabei in festem, flüssigen oder in pastösem Zustand vorliegen.

Die Zusammensetzung enthält die Aminverbindung und wenigstens einen Polycarboxylatether. Die Zusammensetzung ist insbesondere eine Zusatzmittelzusammensetzung, bevorzugt ein Polycarboxylatether-basiertes Betonzusatzmittel, wobei die Aminverbindung eine Formulierungskomponente darstellt.

Mit Vorteil liegt dabei ein Gewichtsverhältnis von Aminverbindung zum wenigstens einen Dispergiermittel in einem Bereich von 1:50 - 50:1, bevorzugt 1:10 - 10:1, im Besonderen 1:10 - 5:1, speziell 1:8 - 2:1 oder 1:2 - 2:1.

Gemäss einer speziellen Ausführungsform enthält die Zusammensetzung folgende Komponenten oder die Zusammensetzung besteht daraus:

a) 2 - 70 Gew.-%, insbesondere 10 - 60 Gew.-%, bevorzugt 15 - 50 Gew.-% des Dispergiermittels,

b) 0.2 - 60 Gew.-%, insbesondere 1 - 40 Gew.-%, bevorzugt 3 - 30 Gew.-% der erfindungsgemäß verwendeten Aminverbindung,

c) 10 - 95 Gew.-%, insbesondere 40 - 90 Gew.-%, bevorzugt 50 - 80 Gew.-% Wasser,

d) 0 - 50 Gew.-%, insbesondere 0 - 10 Gew.-% oder 0.001 - 5 Gew.-% weitere Zusatzmittel, wie z.B. Beschleuniger, Verzögerer, Luftporenbildner, Entschäumer, Schwindreduzierer, Korrosionsinhibitor, Konservierungsmittel, Stabilisierer und/oder Farbstoffe.

Die Gewichtsangaben sind dabei jeweils auf den Trockengehalt oder den eigentlichen Wirkstoffgehalt der jeweiligen Komponenten sowie das Gesamtgewicht der Zusammensetzung bezogen.

In diesem Fall ist die Zusammensetzung insbesondere ein Beton- und/oder Mörtelzusatzmittel mit der Aminverbindung als Formulierungskomponente. Des Weiteren bezieht sich die Erfindung auf eine mineralische Bindemittelzusammensetzung enthaltend wenigstens ein mineralisches Bindemittel und die erfindungsgemäß verwendeten Aminverbindung sowie ein Dispergiermittel, welches einen Polycarboxylatether beinhaltet. Optional kann die mineralische Bindemittelzusammensetzung zudem wie vorstehend beschriebene Aggregate, Zusatzmitttel und/oder Anmachwasser enthalten. Insbesondere enthält die mineralische Bindemittelzusammensetzung zudem tonhaltige Aggregate, insbesondere tonhaltigen Sand, tonhaltigen Kies und/oder tonhaltige Gesteinskörnungen, wie so vorgängig beschrieben sind.

Die mineralische Bindemittelzusammensetzung kann dabei in festem, flüssigen oder in pastösem Zustand vorliegen.

Zudem betrifft die Erfindung eine ausgehärtete Bindemittelzusammensetzung, welche erhältlich ist durch Anmachen einer wie vorstehend beschriebenen mineralischen Bindemittelzusammensetzung mit Wasser und anschliessendem Aushärten.

Ein weiterer Aspekt der vorliegenden Erfindung betrifft ein Verfahren, umfassend einen Schritt der Zugabe der erfindungsgemäß verwendeten Aminverbindung zu einem Polycarboxylatether und, insbesondere, zusätzlich zu einem mineralischen Bindemittel, zu Aggregaten, zu einem Anmachwasser und/oder zu einem Zusatzmittel für Beton und/oder Mörtel. Das Verfahren ist dabei insbesondere ein Verfahren zur Herstellung einer Zusammensetzung wie Sie vorstehend beschrieben ist, wobei es sich bevorzugt um ein Verfahren zur Herstellung einer mineralischen Bindemittelzusammensetzung handelt.

Im Speziellen handelt es sich um ein Verfahren zur Herstellung einer mineralischen Bindemittelzusammensetzung, enthaltend wenigstens ein mineralisches Bindemittel, wobei vor, während und/oder nach dem Anmachen der Bindemittelzusammensetzung die erfindungsgemäss verwendete Aminverbindung zu wenigstens einer Komponente der Bindemittelzusammensetzung gegeben wird. Die erfindungsgemäss verwendete Aminverbindung kann beispielsweise dem Anmachwasser zugemischt werden. Es ist aber auch möglich, wenigstens einen Teil der Aminverbindung bereits vor dem Anmachen mit dem mineralischen Bindemittel, allfälligen Aggregaten und/oder einem weiteren Zusatzmittel für Beton und/oder Mörtel zu vermischen.

Insbesondere können z.B. vor dem Anmachen der mineralischen Bindemittelzusammensetzung wenigstens eine Komponente der mineralischen Bindemittelzusammensetzung, insbesondere das mineralische Bindemittel und/oder Aggregate, mit der erfindungsgemäß verwendeten Aminverbindung vermischt oder beschichtet werden. Bevorzugt werden die Aggregate vermischt oder beschichtet. Die Zugabe der Aminverbindung kann in diesem Fall z.B. bereits in einem Kieswerk erfolgen.

Das in der mineralischen Bindemittelzusammensetzung verwendete Dispergiermittel kann ebenfalls vor, während und/oder nach dem Anmachen der mineralischen Bindemittelzusammensetzung zugegeben werden.

Die Aminverbindung und das Dispergiermittel können dabei zeitgleich oder zeitlich versetzt zugegeben werden.

Gemäss einer bevorzugten Ausführungsform werden die Aminverbindung und das Dispergiermittel gemeinsam zur mineralischen Bindemittelzusammensetzung zugegeben, insbesondere durch Zugabe in das Anmachwasser. Ebenfalls vorteilhaft kann es sein, die Aminverbindung und das Dispergiermittel in Form eines Zusatzmittels, z.B. in Form einer wässrigen Lösung, vorzumischen und beim Anmachen der Bindemittelzusammensetzung beizugeben. Möglich ist es aber z.B. auch, die Aminverbindung bereits vorgängig den Aggregaten beizugeben und das Dispergiermittel erst mit dem Anmachwasser beim Anmachen der Bindemittelzusammensetzung beizugeben.

Aus den nachfolgenden Ausführungsbeispielen ergeben sich weitere vorteilhafte Ausführungsformen der Erfindung.

## Ausführungsbeispiele

1. Substanzen und Materialien

Folgende Substanzen wurden für die Ausführungsbeispiele verwendet (Tabelle 1):

*Tabelle 1*

| Bezeichnung | Substanz Bezugsquelle | |
|---|---|---|
| **PCE** | Sika ViscoCrete® RMC-1; Polycar-boxylathether mit Teilstruktureinheiten **S1**, **S2**, und **S3**, wie vorstehend beschrieben); 30 Gew.-% in $H_2O$ | Sika Schweiz |
| **BHT** | Bis-(hexamethylen)-triamin; 50 Gew.-% in $H_2O$ | Sigma-Aldrich, Schweiz |
| **$AS_{98}$**<br>**$AS_{50}$** | Ameisensäure; 98 Gew.-%<br>Ameisensäure; 50 Gew.-% in $H_2O$ | Sigma-Aldrich, Schweiz |
| **Sul** | Schwefelsäure; 50 Gew.-% in $H_2O$ | Sigma-Aldrich, Schweiz |
| **AH** | Adipinsäure-Hexamethylendiaminsalz (kristallin) | BASF Schweiz AG |
| **DO** | 1,8-Diaminooctan; 50 Gew.-% in $H_2O$ | Sigma-Aldrich, Schweiz |
| **DH** | 1,6-Diaminohexan; 50 Gew.-% in $H_2O$ | Sigma-Aldrich, Schweiz |
| **DAMP** | 1,5-diamono-2-methylpentan; 50 Gew.-% in $H_2O$ | Sigma-Aldrich, Schweiz |
| **TETA** | Triethylentetramin; 50 Gew.-% in $H_2O$ | Sigma-Aldrich, Schweiz |
| **TEPA** | Tetraethylenpentamin; 50 Gew.-% in $H_2O$ | Sigma-Aldrich, Schweiz |
| **PEHA** | Pentaethylenhexamin; 50 Gew.-% in $H_2O$ | Sigma-Aldrich, Schweiz |
| **FL** | Floquat FL4250RD (Polydiallyldimethylammoniumchlorid; polyDADMAC; kationisch); 25 Gew.-% in $H_2O$ | SNF, Frankreich |
| **Jeff** | Jeffamine® EDR-148 (Polyetheramin) | Huntsman, Belgien |
| **Standardsand** | Flusssand gewaschen und getrocknet (MBV[1)] = 6 - 7 mg/g Sand) | Kieswerk Hauser AG, Schweiz |

(fortgesetzt)

| Bezeichnung | Substanz Bezugsquelle | |
|---|---|---|
| **AdR** | Sand Arena del Rio (Sand mit hohem bis sehr hohem Tonanteil; MBV[1]) = 590 - 630 mg/g Sand) | Ingenieria Extractiva Manuel Rodríguez y CIA, S.A. de C.V, Dolores Hidalgo, Estado de Guanajuato. Mexico |
| **RSA** | NPC Old River Sand (Sand mit mittlerem Tonanteil; MBV[1]) = 115 - 125 mg/g Sand) | Natal Portland Cement, Südafrika |
| **Füller** | Nekafill (Kalksteinfüller) | Netstal AG, Schweiz |
| [1])MBV = Methylenblauwert (Kornklasse 0-75 µm) gemessen nach Standard der International Slurry Surfacing Association (ISSA, Annapolis Maryland), Technical Bulletin No. 145 "Test Method for Determination of Methylene Blue Adsorption Value (MBV) of Mineral Aggregate Fillers and Fines" (Issued 1989; 1st Revision 2005). | | |

2. Herstellung von Zusatzmitteln

Es wurden verschiedene Lösungen von Aminverbindungen **A1 - A10** durch vermischen der in Tabelle 2 angegeben Komponenten hergestellt. Die so hergestellten Lösungen stellen Zusatzmittel dar.

*Tabelle 2 (alle Angaben in Gew.-%)*

| Komponente | A1 | A2 | A3 | A4 | A5* | A6* | A7* | A8* | A9 | A10* |
|---|---|---|---|---|---|---|---|---|---|---|
| **BHT** | 51 | 70 | - | - | - | - | - | - | 50 | - |
| **DH** | - | - | - | 50 | - | - | - | - | - | - |
| **DO** | - | - | - | - | 50 | - | - | - | - | - |
| **TETA** | - | - | - | - | | 50 | - | - | - | - |
| **TEPA** | - | - | - | - | - | - | 50 | - | - | - |
| **PEHA** | - | - | - | - | - | - | - | 50 | - | - |
| **Jeff** | - | - | - | - | - | - | - | - | - | 50 |
| **AH** | - | - | 50 | - | - | - | - | - | - | - |
| **$AS_{50}$** | 49 | - | - | - | - | - | - | - | - | - |
| **$AS_{98}$** | - | 15 | - | 50 | 50 | 50 | 50 | 50 | - | 50 |
| **Sul** | - | - | - | - | - | - | - | - | 50 | - |
| Wasser | - | 15 | 50 | - | - | - | - | - | - | - |
| pH | 4.1 | 10.6 | n.b | n.b | n.b. | n.b | n.b | n.b | n.b. | n.b. |
| n.b. = nicht bestimmt<br>* = nicht erfindungsgemäss | | | | | | | | | | |

3. Mörtelmischungen

Die eingesetzten Mörtelmischungen **MM1** - **MM2** weisen die in Tabelle 3 beschriebenen Trockenzusammensetzungen auf.

*Tabelle 3*

| Komponente | MM1 | MM2 |
|---|---|---|
| Zement | 600 g | 600 g |
| **Füller** | 100 g | 100 g |

(fortgesetzt)

| Komponente | MM1 | MM2 |
|---|---|---|
| **Standardsand** 0-1 mm | 176 g | 176 g |
| **Standardsand** 1-4 mm | 804 g | 804 g |
| **Standardsand** 4-8 mm | 603 g | 603 g |
| Sand **AdR** (0-0.5 mm) | 236 g | - |
| Sand **AdR** (0.5-1 mm) | 237 g | - |
| Sand **AdR** (1-2 mm) | 179 g | - |
| Sand **AdR** (2-8 mm) | 177 g | - |
| Sand **RSA** (0-0.5 mm) | - | 236 g |
| Sand **RSA** (0.5-1 mm) | - | 237 g |
| Sand **RSA** (1-2 mm) | - | 179 g |
| Sand **RSA** (2-8 mm) | - | 177 g |

Als Zement wurde Schweizer CEM I 42.5 N (= Mischung von Zementen aus Normo 4 [Holcim AG/Siggenthal], Vigier CEM I 42.5N [Vigier Ciment AG] und CEM I 42.5 N [Jura Cement/Wildegg] im Gewichtsverhältnis 1:1:1) verwendet.

Zum Anmachen der Mörtelmischungen wurden die Sande, der Füller und der Zement 1 Minute in einem Hobart-Mischer trocken gemischt. Innerhalb von 30 Sekunden wurde das Anmachwasser, dem gegebenenfalls vorgängig das Dispergiermittel (PCE) und/oder eine der Lösungen der Aminverbindungen beigemischt wurden, zugegeben und noch weitere 2.5 Minuten gemischt. Die Gesamtmischzeit nass dauerte jeweils 3 Minuten.

4. Testverfahren

Die Fliessfähigkeit oder Verarbeitbarkeit der Mörtelzusammensetzungen wurde anhand des Setzmasses bestimmt. Dies jeweils 3, 30, 60 und 90 Minuten nach dem Anmachen der Mörtelzusammensetzungen. Das Setzmass (SM) wurde analog Norm EN 12350-2, adaptiert für Mörtel, bestimmt.

Zudem wurden die Druckfestigkeiten zu verschiedenen Zeiten nach dem Anmachen bestimmt. Die Prüfung zur Bestimmung der Druckfestigkeit (in MPa bzw. N/mm$^2$) erfolgte in Anlehnung an Norm EN 196-1.

5. Resultate

In Tabelle 4 sind die Resultate unter Verwendung verschiedener Additive in Mörtelmischung **MM1** und **MM2** zusammengefasst.

*Tabelle 4 (alle Gew.-% bezogen auf Zementgehalt)*

| Nr. | Mörtelmischung (w/z) | Dosierung PCE [Gew.-%] | Additiv/ Dosierung [Gew.-%] | Setzmass [mm] nach | | | |
|---|---|---|---|---|---|---|---|
| | | | | 3 Min | 30 Min | 60 Min | 90 Min |
| **V1*** | **MM1** (0.6) | - | - | < 25 | n.m. | n.m. | n.m. |
| **V2*** | **MM1** (0.6) | 0.87 | - | 95 | 41 | 24 | 13 |
| **V3** | **MM1** (0.6) | 0.65 | **A1**/0.50 | 95 | 62 | 46 | 35 |
| **V4** | **MM1** (0.6) | 0.65 | **A3**/0.32 | 97 | 61 | 42 | 34 |
| **V5** | **MM1** (0.6) | 0.65 | **A4**/0.32 | 96 | 55 | 34 | 22 |
| **V6*** | **MM1** (0.6) | 0.70 | **A5**/0.33 | 94 | 55 | 31 | 21 |
| **V7*** | **MM1** (0.6) | 0.77 | **A6**/0.33 | 93 | 41 | 42 | - |
| **V8*** | **MM1** (0.6) | 0.77 | **A7**/0.33 | 94 | 50 | 29 | 19 |
| **V9*** | **MM1** (0.6) | 0.77 | **A8**/0.33 | 93 | 48 | 25 | 15 |
| **V10** | **MM1** (0.6) | 0.65 | **A9**/0.33 | 95 | 52 | 32 | 15 |
| **V11*** | **MM1** (0.6) | 0.65 | **A10**/0.33 | 52 | 24 | 17 | n.m. |
| **V12*** | **MM1** (0.6) | 0.65 | **FL**/0.42 | 94 | 67 | 50 | 25 |
| **V13*** | **MM2** (0.6) | 0.52 | - | 93 | 65 | 45 | 41 |
| **V14*** | **MM2** (0.6) | 0.42 | - | 85 | 57 | 46 | 23 |
| **V15*** | **MM2** (0.6) | 0.42 | **FL**/0.42 | 95 | 65 | 52 | 28 |
| **V16** | **MM2** (0.6) | 0.42 | **A2**/0.39 | 95 | 75 | 60 | 50 |
| **V17** | **MM2** (0.6) | 0.65 | **A3**/0.32 | 97 | 59 | 48 | 39 |
| **V18** | **MM2** (0.6) | 0.42 | **A4**/0.39 | 96 | 60 | 45 | 30 |

n.m. = nicht messbar, da zu steif

* = nicht erfindungsgemäss

Bei Versuch **V2** (nur PCE, keine Aminverbindung) wurde eine Druckfestigkeit von 13.1 MPa (nach 1 Tag) und 20.7 MPa (nach 2 Tagen) gemessen. Die entsprechenden Werte bei Versuch **V3** (PCE tiefer dosiert, zusätzliche Aminverbindung) betragen 13.0 MPa (nach 1 Tag) und 20.4 MPa (nach 2 Tagen).

Die Versuche **V1** - **V3** belegen dabei, dass durch die erfindungsgemäße Verwendung von der Aminverbindungen (Versuch **V3**), die Verarbeitbarkeit von Mörtelmischungen mit hohen Tonanteilen über die Zeit besser aufrechterhalten werden können als mit signifikant höheren Dosierungen des Dispergiermittels (PCE; Versuch **V2**). Dies zudem ohne negativen Einfluss auf die Entwicklung der Druckfestigkeiten in den ersten beiden Tagen.

Des Weiteren zeigt ein Vergleich der Versuche **V13 - V18** (alle mit Mörtelmischung **MM2**) insbesondere, dass

die erfindungsgemäß verwendeten Aminverbindungen (Versuche **V16** - **V18**) die Verarbeitbarkeit der Mörtelmischungen über die Zeit besser aufrechterhalten können als ein kationisches Polmyer auf Basis von polyDADMAC (Versuch **V15**). Speziell vorteilhaft sind dabei die Lösungen **A2** und **A3**, welche auf Bis-(hexamethylen)-triamin bzw. 1,6-Diaminohexan basieren. Stellt man die Versuche **V3**, **V4**, **V5 und V10** mit Versuch **V11** (Lösung **A10**; nicht erfindungsgemäss) gegenüber, zeigen sich auch klar die Vorteile der erfindungsgemäß verwendeten Aminverbindungen gegenüber Polyetheraminen (**Jeff**). Zusammenfassend ergibt sich, dass durch Verwendung von Aminverbindungen gemäß Anspruch 1 Verarbeitbarkeit auch von mineralischen Bindemittelzusammensetzungen bei relativ geringen Dosierungen an Dispergiermitteln signifikant verbessert und über längere Zeit besser aufrechterhalten werden kann. Dies zudem ohne die Druckfestigkeiten der mineralischen Bindemittelzusammensetzungen zu beeinträchtigen. Ohne erfindungsgemäß verwendete Aminverbindungen sind derartige Eigenschaften nur bei hohen Dosierungen an Dispergiermittel erreichbar, was aber weniger ökonomisch ist und sich nachteilig auf die Mörtelqualität auswirken kann.

## Patentansprüche

1. Verwendung einer Aminverbindung und/oder eines Salzes der Aminverbindung zur Inertisierung von Tonmineralien gegenüber Dispergiermitteln in einer mineralischen Bindemittelzusammensetzung enthaltend Tonmineralien und/oder zur Verbesserung der Wirkung eines Dispergiermittels in einer mineralischen Bindemittelzusammensetzung enthaltend Tonmineralien, wobei die Aminverbindung Bis-(hexamethylen)-triamin und/oder 1,6-Diaminohexan umfasst und wobei die Aminverbindung wenigstens teilweise, insbesondere vollständig in Form eines Salzes vorliegt, und zudem das Dispergiermittel einen Polycarboxylatether beinhaltet.

2. Verwendung nach Anspruch 1, wobei die Aminverbindung 1,6-Diaminohexan umfasst.

3. Verwendung nach wenigstens einem der Ansprüche 1 - 2, wobei es sich um ein Ameisensäure-, Essigsäure-, Milchsäure-, Adipinsäure-, Maleinsäure-, Fumarsäure-, Bernsteinsäure-, Salzsäure-, Schwefelsäure-, Phosphorpsäure-, Methaphosphorsäure- und/oder Polyphosphorsäuresalz der Aminverbindung handelt.

4. Verwendung nach Anspruch 3, wobei es sich um ein Adipinsäure- und/oder Ameisensäuresalz der Aminverbindung handelt, besonders bevorzugt um ein Adipinsäuresalz von 1,6-Diamonhexan und/oder ein Ameisensäuresalz von Bis-(hexamethylen)-triamin.

5. Verwendung nach wenigstens einem der Ansprüche 1 - 4, **dadurch gekennzeichnet, dass** die Aminverbindung in einer Menge von 0.01 - 10 Gew.-%, insbesondere 0.02 - 4 Gew.-%, bevorzugt 0.03 - 1 Gew.-%, jeweils bezogen auf den Gehalt an mineralischem Bindemittel verwendet wird.

6. Verwendung nach wenigstens einem der Ansprüche 1 - 5, **dadurch gekennzeichnet, dass** die Bindemittelzusammensetzung tonhaltige Aggregate aufweist, insbesondere tonhaltige Sande, tonhaltigen Kies und/oder tonhaltige Gesteinskörnungen.

7. Zusammensetzung, insbesondere eine Zusatzmittelzusammensetzung oder eine mineralische Bindemittelzusammensetzung, umfassend eine Aminverbindung wie Sie in einem der Ansprüche 1 - 6 definiert ist und zudem wenigstens einen Polycarboxylatether.

8. Zusammensetzung nach Anspruch 7, umfassend zusätzlich wenigstens einen Vertreter aus der Gruppe bestehend aus mineralischen Bindemitteln, Aggregaten und Zusatzmitteln für Beton und/oder Mörtel.

9. Verfahren, insbesondere zur Herstellung einer Zusammensetzung nach wenigstens einem der Ansprüche 7 - 8, wobei es sich bevorzugt um eine mineralische Bindemittelzusammensetzung handelt, umfassend einen Schritt der Zugabe einer Aminverbindung wie sie in wenigstens einem der Ansprüche 1 - 6 definiert ist, zu einem Polycarboxylatether und, insbesondere, zu einem mineralischen Bindemittel, zu Aggregaten und/oder einem Zusatzmittel für Beton und/oder Mörtel.

10. Ausgehärtete Bindemittelzusammensetzung, erhältlich durch Anmachen einer mineralischen Bindemittelzusammensetzung nach einem der Ansprüche 7 - 8 mit Wasser und anschliessendem Aushärten.

## Claims

1. Use of an amine compound and/or of a salt of the amine compound for rendering clay minerals inert to dispersants in a mineral binder composition comprising clay minerals and/or for improving the effect of a dispersant in a mineral binder composition comprising clay minerals, wherein the amine compound comprises bis(hexamethylene)triamine and/or 1,6-diaminohexane and wherein the amine compound is present at least partly, more particularly wholly, in the form of a salt, and, moreover, the dispersant comprises a polycarboxylate ether.

2. Use according to Claim 1, wherein the amine compound comprises 1,6-diaminohexane.

3. Use according to at least one of Claims 1 - 2, wherein the amine compound is a salt of the amine compound with formic acid, acetic acid, lactic acid, adipic acid, maleic acid, fumaric acid, succinic acid, hydrochloric acid, sulfuric acid, phosphoric acid, metaphosphoric acid and/or polyphosphoric acid.

4. Use according to Claim 3, wherein the amine compound is a salt of the amine compound with adipic acid and/or formic acid, more preferably an adipic acid salt of 1,6-diaminohexane and/or a formic acid salt of bis(hexamethylene)triamine.

5. Use according to at least one of Claims 1 - 4, **characterized in that** the amine compound is used in an amount of 0.01 - 10 wt%, more particularly 0.02 - 4 wt%, preferably 0.03 - 1 wt%, based in each case on the mineral binder content.

6. Use according to at least one of Claims 1 - 5, **characterized in that** the binder composition comprises clay-containing aggregates, more particularly clay-containing sands, clay-containing gravel and/or clay-containing rock grades.

7. Composition, more particularly an admixture composition or a mineral binder composition, comprising an amine compound as defined in any of Claims 1 - 6 and, moreover, at least one polycarboxylate ether.

8. Composition according to Claim 7, additionally comprising at least one representative from the group consisting of mineral binders, aggregates and admixtures for concrete and/or mortar.

9. Method, more particularly for producing a composition according to at least one of Claims 7 - 8, this being preferably a mineral binder composition, comprising a step of adding an amine compound as defined in at least one of Claims 1 - 6 to a polycarboxylate ether and, in particular, to a mineral binder, to aggregates and/or to an admixture for concrete and/or mortar.

10. Cured binder composition obtainable by mixing a mineral binder composition according to any of Claims 7 - 8 with water and then curing it.

## Revendications

1. Utilisation d'un composé aminé et/ou d'un sel d'un composé aminé pour inertiser des minéraux argileux vis-à-vis de dispersants dans une composition de liants minéraux contenant des minéraux argileux et/ou pour améliorer l'effet d'un dispersant dans une composition de liants minéraux contenant des minéraux argileux, le composé aminé comprenant de la bis-(hexaméthylène)-triamine et/ou du 1,6-diaminohexane, et le composé aminé se présentant au moins partiellement, en particulier en totalité sous forme d'un sel, et en outre le dispersant contenant un polycarboxylate-éther.

2. Utilisation selon la revendication 1, le composé aminé comprenant du 1,6-diaminohexane.

3. Utilisation selon l'une des revendications 1 - 2, pour laquelle il s'agit d'un sel de l'acide formique, de l'acide acétique, de l'acide lactique, de l'acide adipique, de l'acide maléique, de l'acide fumarique, de l'acide succinique, de l'acide chlorhydrique, de l'acide sulfurique, de l'acide phosphorique, de l'acide métaphosphorique et/ou de l'acide polyphosphorique du composé aminé.

4. Utilisation selon la revendication 3, pour laquelle il s'agit d'un sel de l'acide adipique et/ou de l'acide formique du composé aminé, de préférence d'un sel de l'acide adipique du 1,6-diaminohexane et/ou d'un sel de l'acide formique

de la bis-(hexaméthylène)-triamine.

5. Utilisation selon au moins l'une des revendications 1 à 4, **caractérisée en ce que** le composé aminé est utilisé en une quantité de 0,01 à 10 % en poids, en particulier de 0,02 à 4 % en poids, de préférence de 0,03 à 1 % en poids, dans chaque cas par rapport à la teneur en le liant minéral.

6. Utilisation selon l'une des revendications 1 à 5, **caractérisée en ce que** la composition de liants comprend des granulats argileux, en particulier des sables argileux, du gravier argileux et/ou des granulats argileux.

7. Composition, en particulier composition d'adjuvants ou composition de liants minéraux, comprenant un composé aminé tel que défini dans l'une des revendications 1 à 6 et en outre au moins un polycarboxylate-éther.

8. Composition selon la revendication 7, comprenant en outre au moins un représentant du groupe consistant en les liants minéraux, les granulats et les adjuvants pour béton et/ou mortier.

9. Procédé, en particulier pour la fabrication d'une composition selon au moins l'une des revendications 7 - 8, dans lequel il s'agit de préférence d'une composition de liants minéraux, comprenant une étape d'addition d'un composé aminé tel que défini dans au moins l'une des revendications 1 à 6 à un polycarboxylate-éther et en particulier à un liant minéral, à des granulats et/ou à un adjuvant pour béton et/ou mortier.

10. Composition de liants durcie, pouvant être obtenue par gâchage d'une composition de liants minéraux selon l'une des revendications 7 à 8 avec de l'eau, puis durcissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1138697 A1
- WO 2006032786 A2, Lafarge
- EP 2341039 A1
- WO 9735814 A1
- WO 9509821 A2
- DE 10015135 A1
- EP 1348729 A1
- WO 2005090416 A1
- EP 1138697 B1
- EP 1061089 B1
- WO 2015059100 A1


### In der Beschreibung aufgeführte Nicht-Patentliteratur


- Test Method for Determination of Methylene Blue Adsorption Value (MBV) of Mineral Aggregate Fillers and Fines. *Technical Bulletin,* 1989, (145
- *CHEMICAL ABSTRACTS,* 8028-89-5
- *Compendium Of Food Additive Specifications; Joint FAO/WHO Expert Committee on Food Additives, 74th Meeting,* 2011, ISBN 978-92-5-107004-8